# EUROPÄISCHE PATENTSCHRIFT

(11) **EP 0 412 123 B1**
(45) Veröffentlichungstag und Bekanntmachung des Hinweises auf die Patenterteilung: **01.09.1993**
(21) Anmeldenummer: 89907152.6
(22) Anmeldetag: 23.06.1989
(51) Int. Cl.: B60L 5/20

(54) **SCHLEIFSTÜCK FÜR STROMABNEHMER SOWIE VERFAHREN ZU SEINER HERSTELLUNG**
COLLECTOR SHOE FOR COLLECTOR AND PROCESS FOR PRODUCING IT
SEMELLE POUR COLLECTEUR ET PROCEDE DE FABRICATION

(30) Priorität: 23.06.1988 DE 3821254
(43) Veröffentlichungstag der Anmeldung: 13.02.1991
(73) Patentinhaber: HOFFMANN & CO. ELEKTROKOHLE GESELLSCHAFT M.B.H., A-4823 Steeg (AT)
(72) Erfinder: HOFFMANN, Peter, A-4823 Steeg (AT); HÖLL, Johann, A-4830 Hallstatt (AT); GRABNER, Herbert, A-4820 Bad Ischl (AT); REISER, Klaus, A-4820 Bad Ischl (AT)
(74) Vertreter: Glawe, Delfs, Moll & Partner
(86) Internationale Anmeldenummer: EP8900710
(87) Internationale Veröffentlichungsnummer: WO8912561

(56) Entgegenhaltungen:
- DE-B- 1 006 455
- DE-B- 1 011 457
- DE-C- 719 470
- GB-A- 719 810

## Beschreibung

Die Erfindung betrifft ein Schleifstück für Stromabnehmer von der im Oberbegriff des Anspruchs 1 angegebenen Art(Siehe DE-B- 1006455) sowie ein Verfahren zu seiner Herstellung (Siehe GB-A- 719 810).

Üblicherweise ist bei derartigen Schleifstücken die Kohleleiste mit dem als Metallprofil ausgebildeten Träger leitfähig verbunden, so daß der Stromtransport über den metallischen Träger erfolgt. Die leitfähige Verbindung kann durch Löten oder durch eine elektrisch leitfähige Klebeschicht mit eingelagerten Metallteilchen erfolgen. Es ist andererseits auch bekannt, an der Kohleleiste Litzen od. dgl. Anschlußleiter anzubringen, die z.B. an die Metallschicht angelötet oder in einer Ausnehmung mit der Kohleleiste angeordnet und von der Metallschicht überdeckt sind (DE-C-697 808 und DE-C-34 05 674, so daß der Stromtransport unabhängig vom Träger über die Litze und teilweise die Metallschicht erfolgt. Das Anbringen der Litze od. dgl. Anschlußleiter erfordert jedoch besondere Arbeitsschritte, wodurch die Herstellung der Kohleleiste verteuert wird. Auch kann es beim Anlöten der Litze oder bei ihrem Einklemmen an die Ausnehmung zu Fabrikationsfehlern kommen, so daß die Gleichmäßigkeit des Stromübergangs über die gesamte Länge der Kohleleiste nicht gewährleistet ist.

Aus JP 59-99901 (Abstract) ist ein Schleifstück für Stromabnehmer bekannt, bei dem die Schleifleiste aus einem isolierten Träger aus kohle- und glasfaserverstärktem Kunststoff befestigt ist. Die Schleifleiste weist keine Metallschicht und auch keinen in Längsrichtung verlaufenden Anschlußleiter od. dgl. auf, sondern der Strom muß in der Schleifleiste selbst zu einem an deren Ende angeordneten Anschlußblech aus Aluminium fließen. Hierdurch ergibt sich ein relativ hoher Stromwiderstrand und eine beträchtliche Erwärmung der Schleifleiste.

Der Erfindung liegt die Aufgabe Zugrunde, ein Schleifstück der genannten Art so auszubilden, daß mit einfacheren Mitteln ein exakt definierbarer, über die gesamte Länge der Kohleleiste gleichmäßiger Stromtransportweg zur Verfügung gestellt wird.

Lösungen der Aufgabe sind in den Ansprüchen 1 und 3 angegeben. Die Unteransprüche beziehen sich auf vorteilhafte weitere Ausgestaltungen bzw. auf ein Verfahren zur Herstellung des Schleifstücks gemäß den kennzeichnenden Merkmalen des Anspruchs 5.

Ausführungsformen der Erfindung werden anhand der Zeichnung näher erläutert. Es zeigt:
Fig. 1 und 1a den Endbereich eines erfindungsgemäßen Schleifstücks in Stirnansicht und im Längsschnitt;
Fig. 2 und 2a in entsprechender Ansicht eine andere Ausführungsform des erfindungsgemäßen Schleifstucks;
Fig. 3 einen Querschnitt durch den Endbereich des Schleifstücks gemäß einer weiteren Ausführungsform der Erfindung.

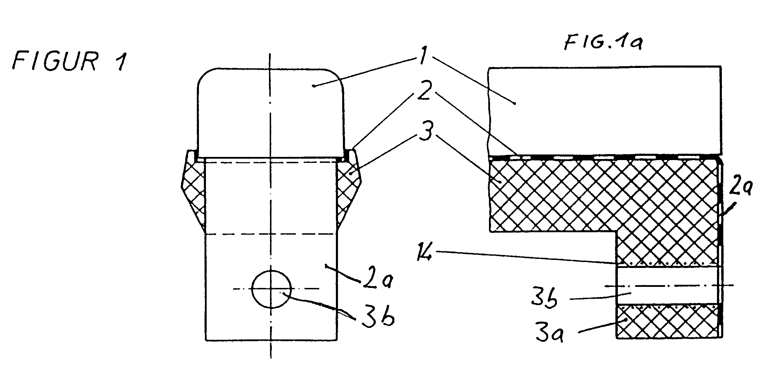

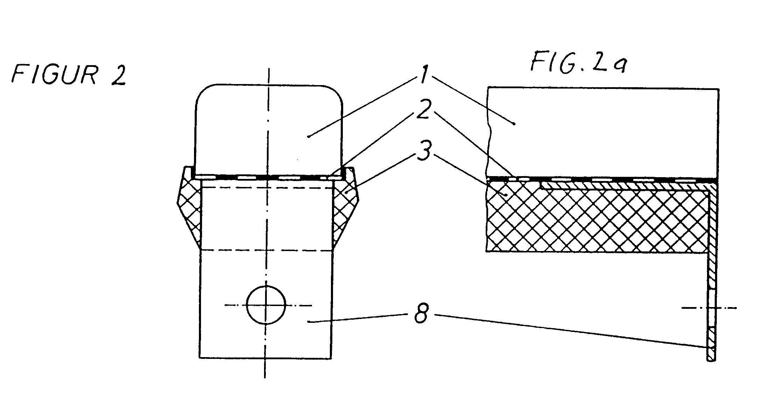

Gemäß Fig. 1 und 1a ist die Kohleleiste 1 an ihrer Unterseite mit einer galvanisch aufgebrachten Kupferschicht 2 versehen, deren Dicke so groß bemessen ist, daß die Kupferschicht 2 einen für den gesamten Stromtransport ausreichenden Leitungsquerschnitt aufweist. Die Kohleleiste 1 mit der Kupferschicht 2 ist mit einem Träger 3 verbunden, der vorzugsweise aus Kunststoff besteht. Eine besonders vorteilhafte Möglichkeit zur Verbindung der Kohleleiste mit dem Träger besteht darin, daß der Träger 3 aus noch nicht ausgehärtetem Kunststoff unmittelbar an die Kohleleiste 1 angeformt oder nach Vorformung an diese angedrückt und dann der Kunststoff ausgehärtet wird. Es kann sich bei dem Kunststoff vorzugsweise um einen faserverstärkten Kunststoff und/oder um einen Schaumkunststoff handeln, wobei im Falle eines Schaumkunststoffes eine elastische bzw. schwingungsgedämpfte Lagerung der Kohleleiste am Träger erzielt werden kann.

An jedem Ende des Trägers 3 ist ein abgewinkelter Ansatz 3a angeformt, der eine Befestigungsbohrung 3b aufweist, die von einem in den Kunststoff eingebetteten Verstärkungslaminat 14 umgeben sein kann. Die galvanische Kupferschicht 2 ist über das Ende der Kohleleiste hinaus verlängert, so daß eine Verlängerung 2a entsteht, die auf die äußere Stirnfläche des Trägers 3 bzw. des Ansatzes 3a abgewinkelt und mit dieser Stirnfläche unlösbar verbunden ist. Der an der Außenseite mit der verlängerten Kupferschicht 2a bedeckte Ansatz 3a dient als Befestigungs- und Anschlußelement sowohl zur mechanischen Befestigung des Schleifstückes als auch zur Herstellung des elektrischen Anschlusses an die Metallschicht 2 und damit an die Kohleleiste 1. In der verlängerten Metallschicht 2a wird eine der Bohrung 3b entsprechende Öffnung angebracht.

Bei der Herstellung des Schleifstücks nach Fig. 1 und 1a wird vorzugsweise so vorgegangen, daß die Kohleleiste 1 in Überlänge hergestellt und galvanisch mit der Kupferschicht 2 versehen wird. Anschließend wird die Kohleleiste 1 auf die gewünschte Länge derart zugeschnitten, daß die Metallschicht 2 nicht durchgetrennt wird, so daß nach Ablösen des abgeschnittenen Kohlestückes die Verlängerung 2a der Metallschicht an der Kohleleiste 1 verbleibt. Nach Abwinkeln dieser Verlängerung 2a wird dann in der beschriebenen Weise der Träger 3 an die Kohleleiste 1 angeformt bzw. anderweitig mit ihr verbunden.

Bei der Ausführungsform nach Fig. 2 und 2a ist die galvanisch aufgebrachte Kupferschicht 2 bündig mit der Kohleleiste 1 abgeschnitten. An die Kupferschicht 2 wird ein Kupferwinkel 8 angelötet. Anschließend wird in der beschriebenen Weise der Träger 3 aus Kunststoff unmittelbar an die Kohleleiste 1 und den Kupferwinkel 8 angeformt, so daß letzterer in den Kunststoffträger 3 eingebettet und dadurch mit diesem unlösbar verbunden wird. Der Kupferwinkel 8 ist gleichzeitig mechanisches Befestigungselement und elektrisches Anschlußelement.

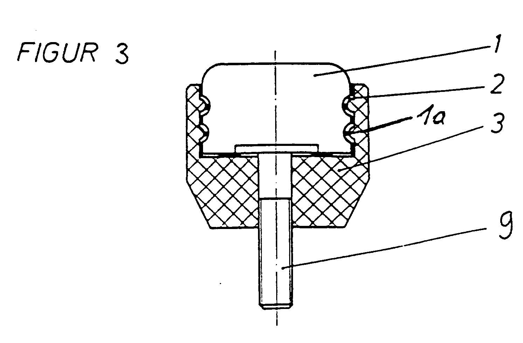

Bei der Ausführungsform nach Fig. 3 ist die Kohleleiste 1 auf drei Seiten mit der galvanischen Kupferschicht 2 versehen und außerdem an den Seitenflächen mit einer Profilierung zur besseren Verankerung des Trägers versehen. Der aus Kunststoff geformte Träger 3 stützt die Kohleleiste 1 nicht nur an ihrer Unterseite ab, sondern umschließt auch deren Seitenflächen über den größeren Teil ihrer Höhe.

In einer Ausnehmung an der Unterseite der Kohleleiste 1 ist vor dem galvanischen Verkupfern der Kopf eines Anschlußbolzens 9 eingesetzt und dann mittels der galvanisch aufgebrachten Verkupferung 2 eingebunden worden. Bei der anschließenden Anformung des Kunststoffträgers 3 wird der Schaft des Anschlußbolzens 9 in den Träger eingebettet. Der überstehende Teil des Bolzens 9 dient sowohl zur mechanischen Befestigung des Schleifstücks als auch zur Herstellung der elektrischen Verbindung.

Abänderungen und Ausgestaltungen der beschriebenen Ausführungsformen sind im Rahmen der Erfindung möglich. So kann bei der Ausführungsform nach Fig. 2 und 2a anstelle des dargestellten Kupferwinkels 8 ein Anschlußstuck in Form einer rohrförmigen Kupfermanschette verwendet werden, die den Endbereich des Trägers 3 auf allen Seiten umschließt. Bei der Ausführungsform nach Fig. 3 kann der Anschlußbolzen 9 auch mit seinem Kopf an die Unterseite der Kupferschicht 2 angelötet werden. Ferner kann der Bolzen 9 so ausgebildet werden, daß er einen Kupferkern, der eine gut leitfähige Verbindung zur Kupferschicht 2 vermittelt, und einen Stahlmantel zur Erhöhung der Festigkeit des Bolzens 9 aufweist.

## Patentansprüche

1. Schleifstück für Stromabnehmer mit einer Kohleleiste (1) und einem diese auf ihre Länge abstützenden Träger (3), wobei die Kohleleiste (1) an ihrer dem Träger (3) zugewandten Seite eine galvanisch aufgebrachte Metallschicht (2) aufweist, dadurch **gekennzeichnet,** daß die Metallschicht einen für den ausschließlich über die Metallschicht verlaufenden Stromtransport ausreichenden Querschnitt aufweist und daß die Metallschicht (2) an mindestens einem Ende des Schleifstücks über die Kohleleiste (1) hinaus verlängert ist, wobei die Verlängerung (2a) der Metallschicht (2) als Anschlußelement zur Herstellung des elektrischen Anschlusses ausgebildet ist.

2. Schleifstück nach Anspruch 1, dadurch **gekennzeichnet,** daß die Verlängerung (2a) abgewinkelt und mit dem Träger (3) verbunden ist.

3. Schleifstück für Stromabnehmer mit einer Kohleleiste (1) und einem diese auf ihre Länge abstützenden Träger (3), wobei die Kohleleiste (1) an ihrer dem Träger (3) zugewandten Seite eine galvanisch aufgebrachte Metallschicht (2) aufweist, dadurch **gekennzeichnet,** daß die Metallschicht einen für den ausschließlich über die Metallschicht verlaufenden Stromtransport ausreichenden Querschnitt aufweist und daß die Metallschicht (2) an mindestens einem Endbereich des Schleifstücks mit einem in dem Träger (3) eingebetteten elektrischen Anschlußelement (8, 9) elektrisch leitfähig verbunden ist.

4. Schleifstück nach Anspruch 1 oder 3, dadurch **gekennzeichnet,** daß der Träger (3) mindestens teilweise aus Kunststoff besteht und das Anschlußelement (2a, 8, 9) in den Kunststoff eingebettet oder an diesen angeformt ist.

5. Verfahren zur Herstellung eines Schleifstücks nach Anspruch 1, dadurch **gekennzeichnet,** daß die Kohleleiste (1) in Überlänge hergestellt und mit der Metallschicht (2) versehen wird, daß dann die Kohleleiste (1) auf die gewünschte Länge derart abgelängt wird, daß eine überstehende Verlängerung (2a) der Metallschicht an der Kohleleiste (1) verbleibt, und daß die Kohleleiste anschließend mit dem Träger (3) verbunden wird.

6. Verfahren zur Herstellung einer Kohleleiste nach einem der Ansprüche 1 bis 4, dadurch **gekennzeichnet,** daß der aus Kunststoff bestehende Träger (3) unmittelbar an die Kohleleiste (1) angeformt und dabei die Verlängerung (2a) der Metallschicht und/oder das Anschlußelement (8, 9) in den Kunststoff eingebettet wird.

## Claims

1. A slider for a current collector having a carbon brush (1) and a support member (3) supporting the brush over its length, said carbon brush (1) having a metal layer (2) galvanically applied to a surface of the carbon brush facing the support member (3),
characterized in that the metal layer has a cross section sufficient for conducting the entire electric current through said metal layer and in that the metal layer (2) is extended at least at one end of the slider beyond the end of the carbon brush (1), the extension portion (2a) of the metal layer (2) defining a connecting means for forming the electrical connection.

2. A slider according to claim 1,
characterized in that the extension portion (2a) forms an angle and is attached to the support member (3).

3. A slider for a current collector having a carbon brush (1) and a support member (3) supporting the brush over its length, in which a metal layer (2) is galvanically applied to a surface of the carbon brush (1) facing the support member (2),
characterized in that the metal layer has a cross section sufficient for conducting the entire electric current through said metal layer and in that the metal layer (2) at least at one end portion of the carbon brush is electrically connected to an electric connecting element (8, 9) imbedded in the support member (3).

4. A slider according to claims 1 or 3,
characterized in that the support member (3) is at least partially made of a plastics material, and in that the electrical connecting element (2a, 8, 9) is imbedded in or moulded onto the plastics material.

5. A process for producing a collector shoe according to claim 1, characterized in that the carbon brush is produced with excess length and provided with a metal layer (2), that the carbon brush is subsequently cut to the desired length in such a way that an extension (2a) of the metal layer remains on the carbon brush (1), and in thereafter the carbon brush is connected to the support member (3).

6. A process for producing a collector shoe according to any one of claims 1-4, characterized in that support member (3) made of a plastics material is moulded directly onto carbon brush (1) and in the extension (2a) of the metallic layer and/or the connecting element (8, 9) is imbedded in the plastics material.

## Revendications

1. Semelle d'archet de pantographe ayant une barre a base de charbon (1) et un support (3) appuyé a celle-ci sur sa longueur, la barre à base de charbon (1) présentant sur son côte tourné vers le support (3) une couche métallique (2) déposée par galvanisation, caractérisée en ce que la couche métallique présente une section transversale suffisante pour le transport du courant a l'exception du courant qui ne passe pas dans la couche métallique et en ce que la couche métallique (2) est prolongée a au moins une extrémité de la semelle d'archet en direction opposée de celle de la barre a base de charbon (1), le prolongement (2a) de la couche métallique (2) constituant une pièce de connexion pour la réalisation de la connexion électrique.

2. Semelle d'archet selon la revendication 1, caractérisée en ce que le prolongement (2a) est coudé et en contact avec le support (3).

3. Semelle d'archet de pantographe avec une barre à base de charbon (1) et un support (3) appuyé à celle-ci sur sa longueur, la barre a base de charbon (1) présentant sur son côté tourné vers le support (3) une couche métallique (2) déposée par galvanisation, caractérisée en ce que la couche métallique présente une section transversale suffisante pour le transport du courant a l'exception du courant qui ne passe pas dans la couche métallique et en ce que la couche métallique (2) est en contact de nature à conduire l'électricité avec une pièce de connexion électrique (8,9) encastrée dans le support (3), à proximité d'au moins une extrémité de la semelle d'archet.

4. Semelle d'archet selon la revendication 1 ou la revendication 3, caractérisée en ce que le support (3) est constitué au moins partiellement de matière synthétique et la pièce de connexion (2a,8,9) est encastrée dans la matière synthétique ou moulée dans celle-ci.

5. Procédé de fabrication d'une semelle d'archet selon la revendication 1, caractérisé en ce que la barre à base de charbon (1) est fabriquée en surlongueur et présente la couche métallique (2), en ce que la barre à base de charbon (1) est ensuite découpée à la longueur désirée, de sorte que le prolongement (2a) en saillie de la couche métallique reste sur la barre à base de charbon (1) et en ce que la barre à base de charbon est ensuite assemblée avec le support (3).

6. Procédé de fabrication d'une barre à base de charbon selon l'une des revendications 1 à 4, caractérisé en ce que le support (3) constitué de matière synthétique est directement moulé sur la barre à base de charbon (1), le prolongement (2a) de la couche métallique et/ou la pièce de connexion (8,9) étant ainsi encastrés dans la matière synthétique.
